# DEMANDE DE BREVET EUROPEEN

(11) **EP 1 743 793 A1**
(43) Date de publication de la demande: **17.01.2007**
(21) Numéro de dépôt: 06300764.5
(22) Date de dépôt: 06.07.2006
(51) Int. Cl.: B60J 10/00, B60J 10/04

(54) **Dispositif de guidage de l'eau pour une vitre de véhicule**

(30) Priorité: 11.07.2005 FR 0552127
(71) Demandeur: PEUGEOT CITROËN AUTOMOBILES S.A., 78140 Velizy Villacoublay (FR)
(72) Inventeur: Desreaux, Pascal, 35170 BRUZ (FR)

(57) **Abrégé**

L'invention se rapporte à un dispositif de guidage de l'eau pour une vitre (20) de véhicule.

Selon l'invention, le dispositif comprend une pièce (50, 52) oblongue formant gouttière équipant un bord inférieur (21) de la vitre.

## Description

L'invention se rapporte à un dispositif de guidage de l'eau pour une vitre de véhicule.

Les portes des véhicules automobiles équipées de vitres montées mobiles possèdent généralement un profilé de type coulisse, qui assure le guidage latéral de la glace coulissante dans ses mouvements et son étanchéité en position de fermeture. Un profilé de type lécheur est aussi généralement prévu au niveau de la fente par laquelle la glace pénètre à l'intérieur de la carrosserie pour assurer l'étanchéité suivant le bord inférieur de l'encadrement de vitre.

Toutefois, ces profilés ne suffisent à assurer totalement l'étanchéité des portières. Des entrées d'eau sont constatées dans les zones situées à proximité des bords latéraux de la vitre, notamment entre la coulisse de la vitre et les extrémités du joint lécheur.

Les entrées d'eau observées provoquent alors des blocages de serrure par temps froid, l'eau gèle dans la serrure. L'eau infiltrée provoque également la corrosion d'éléments mécaniques et des bruits désagréables pour les passagers du véhicule.

Le brevet US4962601 présente un dispositif de guidage de l'eau placé dans la partie inférieure de la vitre, le dispositif est composé d'un joint disposé transversalement à la vitre. Ce joint récolte l'eau coulant le long de la face extérieure de la vitre et la guide vers l'un des bords de la vitre de façon à ce que l'eau s'écoule vers le bas de la porte où un orifice d'évacuation est ménagé.

Toutefois un tel dispositif ne permet pas de remédier aux entrées d'eau décrites ci-dessus ; les zones critiques situées entre la coulisse de la vitre et les extrémités du joint lécheur ne sont pas traitées.

Un but de la présente invention est de pallier tout ou partie des inconvénients de l'art antérieur relevés ci-dessus.

A cette fin, le dispositif de guidage selon l'invention, par ailleurs conforme à la définition générique qu'en donne le préambule ci-dessus, est essentiellement caractérisé en ce qu'il comprend une pièce oblongue formant gouttière équipant un bord inférieur de la vitre.

Par ailleurs, l'invention peut comporter l'une ou plusieurs des caractéristiques suivantes :
- la pièce s'étend sur une partie du bord inférieur de la vitre, et elle est disposée à proximité d'un des bords latéraux de la vitre,
- la pièce comprend un corps à l'intérieur duquel est ménagé une gorge délimitée par deux parois verticales élastiquement déformables s'étendant sur toute la longueur de la pièce et destinée à accueillir le bord inférieur de la vitre,
- le corps comprend une première paroi latérale s'étendant en saillie par rapport à l'une des parois verticales, la première paroi latérale et la paroi verticale adjacente forment une première gouttière,
- le corps comprend une deuxième paroi latérale s'étendant en saillie par rapport à l'autre paroi verticale, la deuxième paroi latérale et la paroi verticale adjacente forment une deuxième gouttière,
- chaque gouttière est conformée pour diriger l'eau vers l'une des extrémités de la gouttière,
- l'extrémité est disposée à l'opposé du bord latéral de la vitre,
- les deux parois latérales se rejoignent de façon à former une partie creuse de forme sensiblement cylindrique s'étendant sous la gorge et ouverte à ses deux extrémités axiales,
- l'extrémité axiale adjacente au bord de la vitre latérale comprend une ouverture en biseau orientée vers le haut s'étendant sous le bord latéral de la vitre,
- la partie creuse s'étend longitudinalement de façon inclinée par rapport à l'horizontal pour amener l'eau récoltée par l'ouverture en biseau à l'autre extrémité,
- un composé adhésif est disposé entre la gorge de la pièce et le bord inférieur de la vitre,
- la pièce est réalisée en caoutchouc.

D'autres particularités et avantages apparaîtront à la lecture de la description ci-après faite en référence aux figures dans lesquelles :
- la figure 1 représente une vue extérieure de la porte arrière d'un véhicule équipée d'une vitre,
- la figure 2 représente une vue en perspective du bord inférieur d'une vitre équipé du dispositif de l'invention conforme à un premier mode de réalisation,
- la figure 3 représente une vue en perspective du bord inférieur d'une vitre équipé du dispositif de l'invention conforme à un deuxième mode de réalisation,

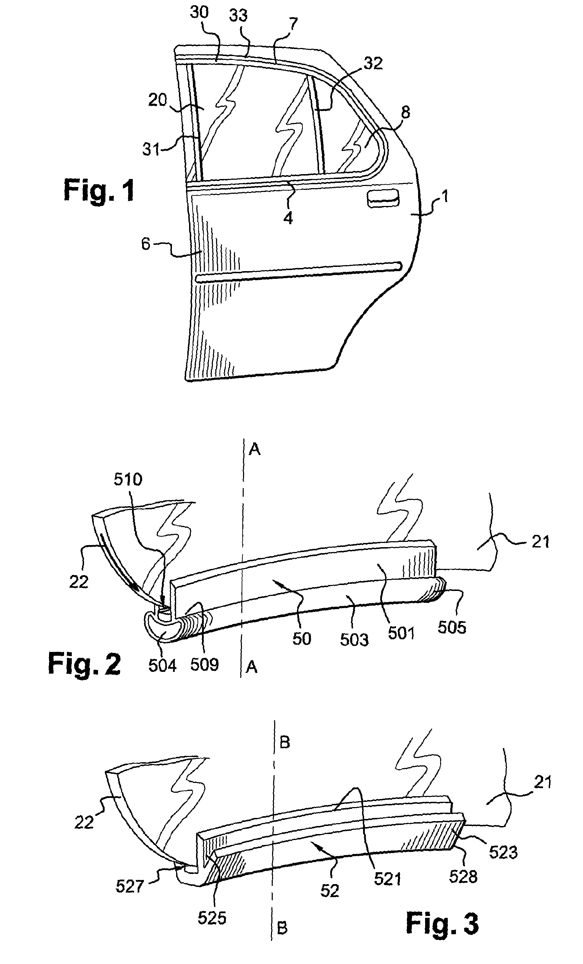

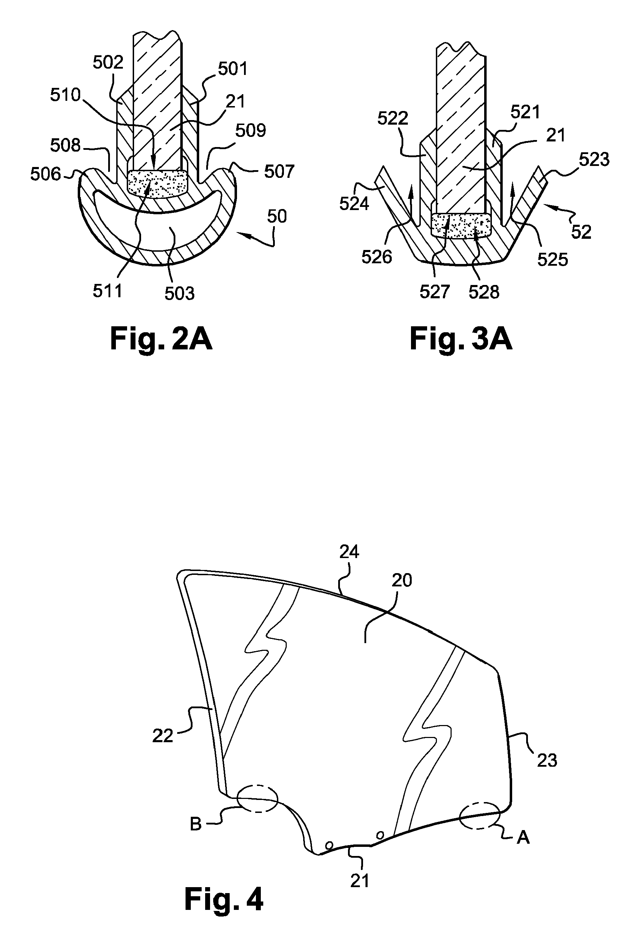

- les figures 2A et 3A représentent des vues en coupe selon AA et BB respectivement des dispositifs des figures 2 et 3.
- la figure 4 représente une vue de face d'une vitre, les zones pouvant recevoir le dispositif de l'invention sont mises en évidence.

La figure 1 représente une porte 1 comprenant dans sa partie supérieure un cadre 7 et dans sa partie inférieure un caisson 6. Le cadre 7 est destiné à être occupé par une vitre mobile 20, apte à s'escamoter dans le caisson 6 de la porte grâce à des moyens de manoeuvre de type lève-vitre (non représenté) et par une vitre fixe 8.

Une partie du cadre 7 est équipée d'un profilé de type « coulisse » 30 assurant le guidage latéral de la glace coulissante dans ses mouvements et son étanchéité en position de fermeture, une autre partie de la coulisse se situe entre la vitre mobile 20 et la vitre fixe 8. La coulisse 30 comprend deux tronçons latéraux 31, 32 et un tronçon supérieur 33. La coulisse entoure ainsi les bords latéraux 22, 23 et le bord supérieur 24 de la vitre.

Un profilé de type lécheur 4 est aussi placé au niveau de la fente par laquelle la glace 20 pénètre à l'intérieur du caisson 6 pour assurer l'étanchéité suivant le bord inférieur de l'encadrement de vitre.

Selon l'invention, le bord inférieur de la vitre 21 destiné à rester à l'intérieur du caisson 6 est équipé d'un profilé complémentaire 50, 52.

Comme présenté à la figure 4, le profilé occupe, de préférence, partiellement le bord inférieur 21 de la vitre et il est destiné à être placé à proximité d'un des bords latéraux 22, 23 de la vitre 20 ; les localisations les plus appropriées sont mentionnées A et B sur la figure 4. Le profilé est notamment disposé dans la zone située à l'aplomb de l'extrémité du joint lécheur et/ou à proximité de la coulisse. Le profilé se trouve notamment placé à proximité du rayon existant entre le bord latéral 22, 23 et le bord inférieur 21 de la vitre.

Un exemple de profilé 50 est présenté à la figure 2. Le profilé est disposé de façon inclinée par rapport à l'horizontal. Cette pièce de forme oblongue possède une première partie comprenant une gorge 510 délimitée par deux parois verticales élastiquement déformables 501, 502 s'étendant sur toute la longueur du profilé 50 et destinée à accueillir le bord inférieur 21 de la vitre. Ces parois possèdent une épaisseur de l'ordre d'1 mm. Afin d'assurer un meilleur maintien et une meilleure étanchéité, un adhésif 511 peut être disposé entre le fond de la gorge 510 et le bord inférieur 21 de la vitre.

Le profilé 50 possède, placée sous sa gorge 510, une deuxième partie tubulaire 503, s'étendant sur toute la longueur du profilé 50 ; elle possède une forme sensiblement cylindrique. Cette partie tubulaire 503 est ouverte à ses deux extrémités axiales 504, 505.

L'extrémité axiale 504 adjacente au bord de la vitre latérale 22 comprend une ouverture en biseau, en forme de « pelle », orientée vers le haut et s'étendant à proximité du bord latéral de la vitre 22.

Ainsi comme le montre la figure 2 (voir la flèche), cette extrémité axiale 504 permet de récolter l'eau cheminant le long du bord latéral de la vitre 22 ; l'eau est ensuite évacuée à l'autre extrémité 505 du tube. L'eau s'écoule alors vers le bas de la porte dans une zone d'évacuation prévue dans la porte du véhicule. Ainsi la partie tubulaire 503 a un rôle de gouttière, son profil respecte la circulation d'air.

L'eau recueillie peut également provenir de la partie inférieure des tronçons latéraux 31, 32 de la coulisse.

Les extrémités latérales 506, 507 du tube 503 forment avec les parois verticales 501, 502 adjacentes deux logements 508, 509 en forme de V situés de part et d'autre de la vitre 20, comme le montre la figure 2A. Ces logements, servent également de gouttières, plus particulièrement le logement situé du côté extérieur de la vitre est destiné à recueillir l'eau coulant le long de la paroi extérieure de la vitre 20. Ainsi l'eau recueillie dans les logements 508, 509, du fait de la pente du profilé, s'écoule aussi en direction de l'extrémité 505 du profilé et est également évacuée comme décrit ci-dessus.

Le profilé objet de l'invention peut, par exemple, être réalisé en caoutchouc ou en tout autre matériau élastique approprié.

La figure 3 présente un autre exemple de profilé 52 destiné à recueillir l'eau s'écoulant le long de la paroi de la vitre 20. Ce profilé possède une première partie identique au profilé représenté à la figure 2.

La deuxième partie de ce profilé comprend deux parois latérales 523, 524 s'étendant en saillie par rapport aux parois verticales 521, 522 appartenant à la première partie du profilé, de cette façon les parois latérales 523, 524 et les parois verticales 521, 522 adjacentes forment de part et d'autre de la vitre 20 deux gouttières 525, 526 destinées à recueillir l'eau.

La deuxième partie présente sur le profilé de la figure 3 peut être adapté au profilé présenté à la figure 2.

Ainsi, ce type de profilé présente l'avantage de réduire considérablement les risques d'aspersion des éléments mécaniques de la portière et donc évite leur détérioration.

Bien sûr, les profilés 50, 52 de l'invention présentés aux figures 2 et 3 peuvent également comporter un seul type de gouttière 508, 509, 525, 526.

Le profilé peut être adapté à une porte avant ou arrière de véhicule.

## Revendications

1. Dispositif de guidage de l'eau pour une vitre (20) de véhicule, **caractérisé en ce qu'**il comprend une pièce (50, 52) oblongue formant gouttière équipant un bord inférieur (21) de la vitre.

2. Dispositif de guidage selon la revendication 1, **caractérisé en ce que** ladite pièce (50, 52) s'étend sur une partie (A, B) du bord inférieur (21) de la vitre, et **en ce qu'**elle est disposée à proximité d'un des bords latéraux (22, 23) de la vitre (20).

3. Dispositif de guidage selon la revendication 1 ou 2, **caractérisé en ce que** ladite pièce (50, 52) comprend un corps à l'intérieur duquel est ménagé une gorge (510, 527) délimitée par deux parois verticales élastiquement déformables (501, 502, 521, 522) s'étendant sur toute la longueur de ladite pièce (50, 52) et destinée à accueillir le bord inférieur (21) de la vitre.

4. Dispositif de guidage selon la revendication 3, **caractérisé en ce que** ledit corps comprend une première paroi latérale (506, 507, 523, 524) s'étendant en saillie par rapport à l'une des parois verticales (501, 502, 521, 522), ladite première paroi latérale (506, 507, 523, 524) et ladite paroi verticale (501, 502, 521, 522) adjacente forment une première gouttière (508, 509, 525, 526).

5. Dispositif de guidage selon la revendication 4, **caractérisé en ce que** ledit corps comprend une deuxième paroi latérale (506, 507, 523, 524) s'étendant en saillie par rapport à l'autre paroi verticale (501, 502, 521, 522), ladite deuxième paroi latérale (506, 507, 523, 524) et ladite paroi verticale (501, 502, 521, 522) adjacente forment une deuxième gouttière (508, 509, 525, 526).

6. Dispositif de guidage selon la revendication 4 ou 5, **caractérisé en ce que** chaque gouttière (508, 509, 525, 526) est conformée pour diriger l'eau vers l'une des extrémités (505, 528) de ladite gouttière (508, 509, 525, 526).

7. Dispositif de guidage selon les revendications 2 et 6, **caractérisé en ce que** ladite extrémité (505, 528) est disposée à l'opposé du bord latéral (22, 23) de la vitre (20).

8. Dispositif de guidage selon la revendication 5, **caractérisé en ce que** les deux parois latérales (506, 507) se rejoignent de façon à former une partie creuse de forme sensiblement cylindrique (503) s'étendant sous la gorge (510) et ouverte à ses deux extrémités axiales (504, 505).

9. Dispositif de guidage selon les revendications 2 et 8, **caractérisé en ce que** l'extrémité axiale (504) adjacente au bord de la vitre latérale (22, 23) comprend une ouverture en biseau (504) orientée vers le haut s'étendant sous le bord latéral de la vitre (22, 23).

10. Dispositif de guidage selon la revendication 9, **caractérisé en ce que** la partie creuse (503) s'étend longitudinalement de façon inclinée par rapport à l'horizontal pour amener l'eau récoltée par l'ouverture en biseau (504) à l'autre extrémité (505).

11. Dispositif de guidage selon l'une quelconque des revendications 3 à 10, **caractérisé en ce qu'**un composé adhésif (511, 528) est disposé entre la gorge (510, 527) de ladite pièce (50, 52) et le bord inférieur (21) de la vitre (20).

12. Dispositif de guidage selon l'une quelconque des revendications précédentes, **caractérisé en ce que** ladite pièce (50, 52) est réalisée en caoutchouc.
